# EUROPÄISCHE PATENTANMELDUNG

(11) **EP 0 880 895 A1**
(43) Veröffentlichungstag der Anmeldung: **02.12.1998**
(21) Anmeldenummer: 98810285.1
(22) Anmeldetag: 03.04.1998
(51) Int. Cl.: A01N 65/00, A01N 25/00, A01N 61/00

(54) **Molluskizide Zusammensetzung**

(30) Priorität: 27.05.1997 CH 1247/97
(71) Anmelder: Walter Schmid AG, 8152 Glattbrugg (CH)
(72) Erfinder: Schmid, Walter, 8152 Opfikon (CH); Speiser, Bernhard, 4118 Rodersdorf (CH)
(74) Vertreter: Patentanwaltsbüro Feldmann AG

(57) **Zusammenfassung**

Die vorliegende Erfindung betrifft eine molluskizide Zusammensetzung, die als Wirkstoff ein Gärprodukt mit basischem pH-Wert aus anaerober thermophiler Fermentation biogener Haus-, Gewerbe- und Gartenabfälle enthält. Die Zusammensetzung eignet sich besonders zur Bekämpfung von Schnecken, die landwirtschaftliche und gartenbauliche Schäden verursachen oder Vektoren für Krankheiten sind, die auf den Menschen oder auf Haus- und Nutztiere übertragbar sind.

## Beschreibung

Die vorliegende Erfindung betrifft eine molluskizide Zusammensetzung nach dem Oberbegriff des Patentanspruches 1.

Im medizinisch-epidemiologischen Bereich sind Schnecken von enormer Bedeutung als Ueberträger und Zwischenwirte einer Reihe von Parasiten des Menschen und von Haustieren. So durchlaufen zum Beispiel
- *Schistosoma sp.*, der Bilharziose-Erreger des Menschen und anderer Warmblüter
- *Fasciola hepatica*, der grosse Leberegel beim Menschen, Schaf, Rind und anderen Haustieren, und
- *Paragonimus westermani*, der Lungenegel des Menschen obligate Stadien ihrer Entwicklung im Körper von Schnecken. Epidemiologisch ist es äusserst vorteilhaft die Krankheitserreger indirekt durch die Kontrolle ihrer Zwischenwirte zu bekämpfen.

Desweiteren sind Schnecken weltweit wichtige Schädlinge auf Nutzpflanzen. Sensibel auf Schneckenfrass sind viele Ackerkulturen, Gemüse, Zierpflanzen, Beeren, sowie besonders Jungpflanzenzuchten, da schon bei geringen Dichten der Herbivoren die jungen Pflanzen und Triebe völlig zerstört werden können. Viele der durch Schnecken potentiell gefährdeten Agrarprodukte werden im erntefrischen Zustand, ohne Weiterverarbeitung an den Endverbraucher verkauft. Es hat sich gezeigt, dass der Normalverbraucher schon durch geringste, von den Schnecken verursachte, Frasschäden vom Kauf der Waren abgehalten wird. Dies führt zu empfindlichen Umsatzeinbussen für den Anbauer und daher liegt die Toleranzgrenze für Schadschnecken sehr niedrig.

Im folgenden sollen einige der wichtigen Schadschnecken beschrieben werden:
*Deroceras reticulatum* (Fam.: Limacidae), die genetzte Ackerschnecke ist eine der wichtigsten Schadschnecken und ist in Europa, Nord- und Mittelamerika, Australien und Asien weit verbreitet. Sie schädigt verschiedene Ackerkulturen wie Winterweizen, Raps, Kartoffeln sowie viele Gemüsesorten und andere Pflanzenkulturen.
*Arion distinctus* und *A*. *lusitanicus* (Fam.: Arionidae) sind Vertreter der Wegschnecken. Während erstere durch ober- und unterirdischen Frass Qualitätsverluste vor allem im Gemüsebau verursacht, ist letztere die wichtigste Schadschnecke im Gemüsebau und in Hausgärten und verursacht grosse Ausfälle durch Beschädigung und Kahlfrass oberirdischer Pflanzenteile. Die eingeschleppte Schnecke *Achatina fulica* ist der wichtigste Schädling unter den Landschnecken in den Vereinigten Staaten. In Ostasien verursacht *Pomacea spp.* Grosse Schäden in Reiskulturen.

Weitere Beispiele für ökonomisch und medizinisch wichtige Schadschnecken sind in Godan "Pest Slugs and Snails" (Springer Verlag, Berlin, 1983) aufgelistet.

Zur chemischen Kontrolle von Landschnecken sind seit Jahren Schneckenkörner im Einsatz die Metaldehyd oder Carbamate enthalten. Desweiteren sind Molluskizide wie Inclosamid (BAYLUSCID®), chlorierte Aromaten wie Pentachlorphenol, Polystream oder Carbamate wie Methiocarb (Mesurol®), Carbaryl (SEVIN®) und Mexacarbate (ZECTRAN®) in verschiedenen Staaten zugelassen und erhältlich (siehe auch G.W. Ware ,,The pesticide book", 1989, Thomson Publications, Fresno, CA) . Verschiedene Pyridazinonderivate zur Bekämpfung von Schnecken sind aus EP-A-0 351 589 und EP-A-0 351 591 bekannt.
Die chemische Kontrolle der Schnecken ist meist sehr effektiv und billig, allerdings aus ökologischen und ökonomischen
Gründen nicht unbedenklich, nicht überall praktizierbar und oft nicht gewünscht oder nicht erlaubt.
Einer der wichtigsten Nachteile der konventionellen chemischen Molluskizide ist ihre geringe Spezifität und ihre Toxizität gegenüber Säugetieren. Viele konventionelle Mittel zeigen Nebenwirkungen auf Nicht-Zielorganismen wie Ameisen, Regenwürmer, Vogel oder Fische.
Im Biologischen Landbau sind die herkömmlichen Molluskizide ausnahmslos verboten, und so bleibt einem Landwirt oder Gärtner, der seine Zertifizierung durch einen biologischen Anbauverband nicht verlieren will, nur noch eine sehr beschränkte Auswahl an Bekämpfungsmassnahmen bei Schneckenbefall. Zum einen kann versucht werden, das Einwandern der Schnecken in die Kulturen durch mechanische und elektrische Schneckenbarrieren oder -zäune zu verhindern. Dies bringt einen enormen Material- und Arbeitsaufwand mit sich und ist nur bei kleinen Flächen und ertragsintensiven Kulturen praktikabel.
Zum andern können die Schnecken in den befallenen Flächen in Fallen gefangen werden. Der einfachste und bekannteste Fallentyp ist die "Bierfalle", deren Wirkung allerdings umstritten ist. Weitere, im Biolandbau allerdings nicht zugelassene, Lockstoffe zum Einsatz mit Fallen oder giftigen Ködern sind die in EP-B-0 045 280 beschriebenen Ester niederer bis mittlerer Carbonsäuren. Diese Attraktantien locken jedoch oft mehr Schnecken in die Nähe der Falle als schlussendlich in der Falle landen und schaden somit oft mehr als sie nützen. Ausserdem besitzen sie meist auch eine hohe Attraktivität für viele Nicht-Zielorganismen, was zu unerwünschten Beifängen führt und Vergiftungen von Haus- oder Nutztieren zur Folge haben kann.

Dem Anbauer, der die Schnecken nicht von Hand absammeln kann oder will, bleibt somit als letzte Möglichkeit zur ökologisch korrekten Kontrolle von Schnecken der Einsatz von Fadenwürmern, wie er in der EP-A-0 598 746 beschrieben ist. Die Verwendung von wirtsspezifischen Nematoden der Arten *Phasmarhabditis neopapillosa* und *P*. *hermaphrodita* zur biologischen Kontrolle von Schnecken hat sich in den letzten Jahren in vielen Kulturen bewährt. Die Nematoden werden als Dauerlarven in einer wässrigen Suspension ausgebracht und ihre tödliche Wirkung auf die Schnecken setzt im Schnitt erst nach fünf bis sechs Tagen ein. Für andere Wirbellose oder Wirbeltiere sind diese parasitischen Fadenwürmer unschädlich. Die im Handel erhältlichen Präparate enthalten die Nematoden als Dauerlarven und sind nur wenige Wochen gekühlt haltbar.

Eine kurze Zusammenfassung der im biologischen Anbau bisher zulässigen Bekämpfungsmethoden enthält das FiBL-Merkblatt "Biokulturen vor Schnecken schützen" von B. Speiser (Forschungsinstitut für biologischen Landbau, Frick).

Eine sehr unspezifische molluskizide Wirkung kann durch den Einsatz von ätzenden Mineraldüngern wie zum Beispiel gelöschtem und ungelöschtem Kalk, Chilesalpeter und Kalkstickstoff erreicht werden. Dabei müssen die Schnecken allerdings direkt mit dem Dünger bestäubt werden.

Die molluskizide Wirkung von Schwermetallvebindungen machten sich Winzer und Obstgärtner schon im letzten Jahrhundert zunutze. Die "Bordeaux"-Lösung, eine toxische Mischung aus Kupfersulfat und Kalk, die ihren Namen der Tatsache verdankt, dass sie im Weinbau in der Gegend um Bordeaux eingesetzt wurde, sollte Traubendieben den Appetit verderben. Die gute fungizide und eine schwache molluskizide Wirkung der ,,Bordeaux"-Lösung wurden schnell entdeckt, und noch heute wird die Lösung in manchen Ländern zur Schneckenbekämpfung im Obstbau verwendet. Weitere molluskizide Wirkstoffe auf Schwermetallbasis sind seither entwickelt worden. Bekannt sind zum Beispiel das unter dem Namen "Four-S" in Australien vertriebene Kupfersilikat sowie die von Henderson et al. (Slugs and Snails in World Agriculture, BCPC Mono. 41: 289-90, 1989) beschriebenen organischen Komplexe von Aluminium und Eisen. Da die Schwermetalle nicht nur als Pestizide wirken, sondern auch als Nährstoffe von den Pflanzen aufgenommen und im Boden angereichert werden, ist ihr massiver Einsatz ökologisch sehr bedenklich.

Eine fungizide oder fungistatische Wirkung von wässrigen, mikrobiologisch aktiven Extrakten von aerob kompostiertem biogenen Material ist von R. Sackheim (Dissertation, Rheinische-Friedrich-Wilhelms-Universität Bonn, 1993) beschrieben. Die Extrakte aus aerobem Kompost zeigten eine toxische Wirkung auf schädliche Spinnmilben sowie auf nützliche Raubmilben. Eigene Versuche zeigten, dass aerob kompostiertes Material oder Extrakte davon keine molluskizide Wirkung aufweisen.

Das Prinzip der Methangärung zur Gewinnung von Energie aus Biomasse ist seit langem bekannt und wird auch beim anaeroben Abbau (Vergärung) von biogenen Haus- und Gartenabfällen eingesetzt, wie sie zum Beispiel in der EP-B-0 621 336 beschrieben und als Kompogas®-Verfahren des Anmelders bekannt ist. Die nach der Vergärung anfallenden Gärprodukte oder Digestate werden entweder deponiert, verbrannt oder wie im Kompogas-Verfahren des Anmelders einer fünf- bis zehntägigen aeroben Nachrotte unterzogen, um dann als Pflanzerde genutzt zu werden. Diese belüftete Nachrotte soll die Pflanzen- und Wurzel-Vertäglichkeit des Gärproduktes gewährleisten. Der Kontakt mit Sauerstoff während der aeroben Nachrotte dient ausserdem dazu, die geruchsintensiven Substanzen, wie Schwefelwasserstoff und Ammoniak, die im anaeroben Milieu des Fermenters entstanden sind, durch Oxidation in geruchlose Sulfate und Nitrate umzuwandeln. Dies dient nicht nur der Minimierung von Geruchsbelästigungen, sondern erhöht auch den Wert des Gärproduktes als Pflanzerde oder Düngemittel. Alle bekannten Nachbehandlungs- oder Entsorgungsmethoden für die anaerob entstandenen Gärprodukte sind jedoch sehr zeit-und/oder sehr kostenintensiv.

Die vorliegende Erfindung stellt sich daher die Aufgabe, eine molluskizide Zusammensetzung zur Verfügung zu stellen, die sowohl hochwirksam bei der Bekämpfung von Schadschnecken ist und gleichzeitig durch schnellen Abbau und geringe Nebenwirkungen auf Nicht-Zielorganismen ökologisch einwandfrei und für den Biolandbau brauchbar ist. Desweiteren sollen ein Verfahren zur Herstellung der molluskiziden Zusammensetzung sowie deren Verwendung aufgezeigt werden.

Diese Aufgabe wird durch eine Zusammensetzung gemäss Patentanspruch 1, ein Verfahren gemäss Patentanspruch 8 und eine Verwendung gemäss Patentanspruch 13 gelöst. Weitere Ausführungsvarianten ergeben sich aus den abhängigen Ansprüchen. Die vorliegende Erfindung macht sich die völlig unerwartete molluskizide Wirkung eines Gärproduktes aus anaerober thermophiler Fermentation von biogenen Haus-, Gewerbe- und Gartenabfällen zunutze. Die molluskizide Wirkung des Gärproduktes ist im frischen Zustand, das heisst unmittelbar bis wenige Tage nach Entnahme aus dem Fermenter, am besten. Versuche haben gezeigt, dass die Wirkung des erfindungsgemässen Molluskizides derer von herkömmlichen metaldehydhaltigen Schneckenkörnern ebenbürtig ist und innerhalb von etwa zwei Wochen fast vollständig verloren geht. Anhand von Felddaten wurde gezeigt, dass Nicht-Zielorganismen oder Nützlinge wie Regenwürmer durch das Gärprodukt in keiner Weise negativ beeinflusst werden. Die Spezifität, die kurze Wirkdauer und die Tatsache, dass das erfindungsgemässe Molluskizid nur aus vergorenen biogenen Abfällen und unbedenklichen Füll- und Zusatzstoffen besteht, machen es als ökologisch einwandfreies Mittel besonders interessant für den Einsatz im kontrollierten Bioland- und gartenbau.

Anhand von anaerob vergorenem und anschliessend gesiebtem, frischem Gärprodukt aus einer Kompogas®-Anlage, im Folgenden auch Kompogas®-Digestat, Digestat oder Gärprodukt genannt, oder einer Fraktion davon wird die Wirkung der erfindungsgemässen molluskiziden Zusammensetzungen im folgenden exemplarisch beschrieben.

### Versuch 1: Wirkung von verschiedenen Fraktionen und Formulierungen des Kompogas®-Digestates auf Schnecken

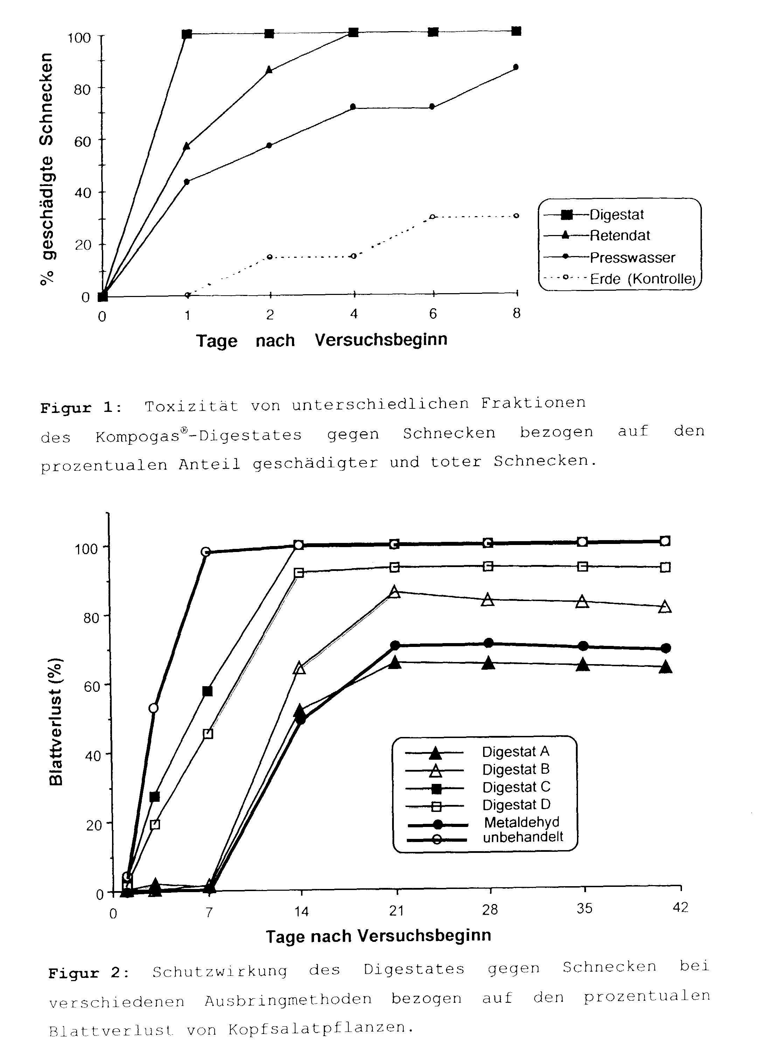

In einem achttägigen Versuch wurde die Wirkung des Kompogas®-Digestates sowie verschiedener Fraktionen und Formulierungen davon auf Schnecken der Art *Arion distinctus* unter Laborbedingungen getestet. Verglichen wurden die molluskizide Wirkung von Kompogas®-Digestat, Presswasser und Retendat, wobei frische feuchte Erde als Negativkontrolle diente. Das Kompogas®-Digestat war in frischem Zustand tiefgekühlt, für fünf Wochen gefroren gelagert und erst vor Versuchsbeginn wieder aufgetaut worden. Bewertet wurde der Gesundheitszustand der Schnecken nach 1, 2, 4, 6 und 8 Tagen.
Wie in Figur 1 dargestellt, zeigte das frische Kompogas®-Digestat die schnellste und stärkste toxische Wirkung auf die Schnecken. Schon bei der ersten Kontrolle nach 24 Stunden waren alle Schnecken geschädigt. Auch das Presswasser und das Retendat zeigten eine Wirkung, die weit über der Hintergrundmortalität in der Kontrollgruppe lag.

### Versuch 2: Wirkung von Kompogas®-Digestat auf Schnecken unter Feldbedingungen

In einem Feldversuch wurde die Schutzwirkung von Kompogas®-Digestat gegen Schneckenfrass am Kopfsalat getestet. Das Gärprodukt wurde auf vier verschiedene Arten eingesetzt. In den Behandlungsgruppen Digestat A, B und D wurde jeweils zu Versuchsbeginn frisches Kompogas®-Digestat eingesetzt. In der Gruppe Digestat A wurde eine Schicht von 1.5 cm oberflächlich gestreut, bei Digestat B die entsprechende Menge an frischem Gärprodukt in den Boden eingearbeitet. Bei Digestat D wurde ein 5cm hoher und 20 cm breiter Streifen von frischem Digestat rings um jedes Salatbeet ausgebracht. Bei Digestat C wurde frisches Kompogas®-Digestat bereits 2 Wochen vor Versuchsbeginn in einer 1.5 cm starken Schicht oberflächlich ausgebracht. Als Positivkontrolle dienten herkömmliche Schneckenkörner mit Metaldehyd als Wirkstoff, die gemäss Herstellerangaben dosiert und gleichzeitig mit Digestat A, B und D ausgebracht wurden. Die Negativkontrolle stellten unbehandelte Parzellen dar. In der Bonitur wurde der Blattverlust der Salat köpfe durch Schneckenfrass erfasst.
Die in Figur 2 dargestellten Mittelwerte für den prozentualen Blattverlust (aus je sechs Probeflächen) zeigen deutlich, dass die Schutzwirkung des frischen, flächig ausgebrachten Kompogas®-Digestates (Digestat A) der Wirkung von herkömmlichen Schneckenkörnern (Metaldehyd) nicht nur ebenbürtig, sondern langfristig sogar leicht überlegen ist.
Innerhalb der besonders sensiblen ersten Wochen (Jungpflanzenstadium) zeigten sowohl oberflächlich gestreutes wie auch in den Boden eingearbeitetes Gärprodukt (Digestat A und B) eine sehr gute Wirkung. Das ältere Kompogas®-Digestat (Digestat C) sowie das Anlegen eines Schutzstreifens rund um die Beete (Digestat D) zeigten zwar signifikant schlechtere Ergebnisse als Digestat A, B und Metaldehyd, die Blattverluste in den entsprechenden Gruppen sind aber innerhalb der ersten Woche deutlich niedriger als auf den Kontrollflächen. Um den Arbeitsaufwand beim Ausbringen des Molluskizides möglichst gering zu halten, empfiehlt es sich also eine oberflächliche Schicht zu streuen.

### Die Ergebnisse der Versuche 1 und 2 zeigen deutlich, dass das erfindungsgemässe Molluskizid unter Praxisbedingungen sowohl im Freiland wie auch in Gewächshäusern äusserst wirksam ist.

### Versuch 3: Wirkung von verschiedenen Mengen von Kompogas®-Digestat auf Schnecken unter Feldbedingungen

Um den Aufwand und die Kosten für den Molluskizideinsatz möglichst gering zu halten, und um die Nährstoffbilanz von Biobetrieben möglichst wenig zu beeinflussen, ist es von Interesse die Dosierung des erfindungsgemässen Molluskizides möglichst gering zu halten. Daher wurden in einem weiteren Feldexperiment unterschiedliche Dosierungen von Kompogas®-Digestat getestet. Als Messgrösse diente wiederum der Blattverlust von Kopfsalatpflanzen. Frisches Gärprodukt wurde gesiebt und unmittelbar vor dem Pflanzen der Salatsetzlinge mit drei unterschiedlichen Dosierungen auf je 4 Versuchsflächen ausgebracht. Getestet wurden "Digestat viel" mit 150 m³/ha ( = 1.5 cm Schichtdicke), "Digestat mittel" mit 50 m³/ha ( = 0.5 cm Schichtdicke) und "Digestat wenig" mit 15 m³/ha ( = 0.15 cm Schichtdicke). Salatpflanzen in unbehandelten Parzellen stellten die Negativkontrolle dar.

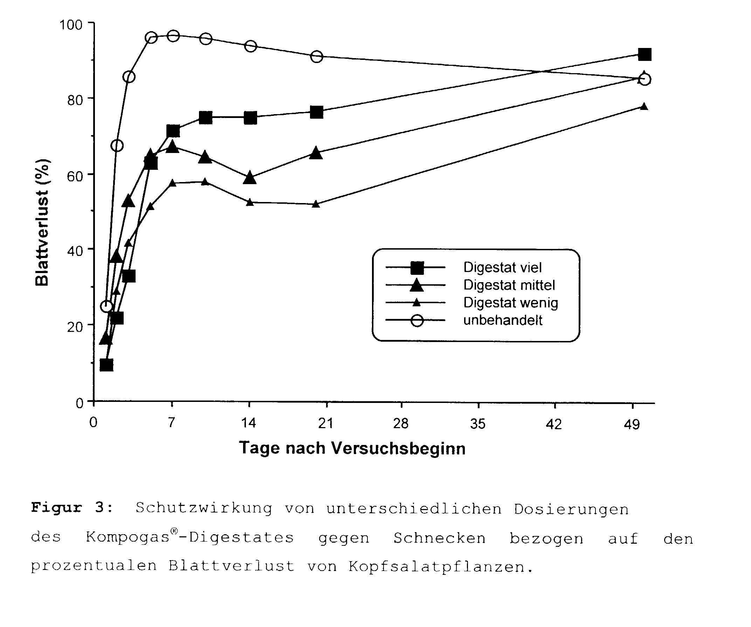

In Figur 3 ist der durchschnittliche Blattverlust in % aus den je 4 Versuchsflächen für alle Boniturtermine dargestellt. In allen Parzellen herrschte während des Versuches ein sehr grosser Schneckendruck. Die Pflanzen in den unbehandelten Kontrollflächen wurden innerhalb weniger Tage fast vollständig zerstört. Die Pflanzen in den behandelten Flächen erlitten vom ersten Tag an signifikant geringere Frasschäden als die Pflanzen der Kontrollgruppe. Diese Wirkung der einmaligen Molluskizidgabe hielt nicht bis zum Ende des Versuches an, sondern schwächte sich mit der Zeit mehr und mehr ab. Aus dem Kurvenverlauf wird deutlich, dass schon die geringste Dosierung von Digestat eine sehr gute Wirkung zeigte. Die Unterschiede zwischen den drei Dosierungsgruppen sind statistisch nicht signifikant.
Da die geringste Dosierung "Digestat wenig" mit 15 m³/ha ( = 0.15 cm Schichtdicke) eine gleichwertige Schutzwirkung wie die höheren Dosierungen zeigte, empfiehlt es sich zum längerfristigen Schutz gefährdeter Kulturen bei hohem Herbivorendruck nicht die Ausbringmenge an erfindungsgemässem Molluskizid zu erhöhen, sondern der ersten Behandlung nach einigen Tagen bis einer Woche eine Zweite folgen zu lassen. Bei Bedarf kann sich auch noch eine Dritte anschliessen.

Alle Komposte und Gärprodukte aus biogenen Haus- und Gartenabfällen enthalten Schwermetalle. Da seit geraumer Zeit Molluskizide auf Schwermetallbasis bekannt sind, liegt die Vermutung nahe, dass im Schwermetallanteil des frischen Kompogas®-Digestates die molluskizide Wirkung begründet liegen könnte. Ein Vergleich mit der Dosierung bekannter schwermetallbasierender Molluskizide zeigt jedoch, dass dies nicht der Fall sein kann. Die von Henderson et al. (Slugs and Snails in World Agriculture, BCPC Mono. 41: 289-90, 1989) getesteten molluskiziden Aluminium-, Kupfer-, Zink- und Eisensalze wurden auf Glasplatten gesprüht und zeigten bei dieser Ausbringungsart eine gute toxische Wirkung auf Nacktschnecken erst bei einer Dosis von 200 µg/cm². Auf feuchter Erde zeigten Aluminium- und Eisensalze erst dann eine gute Kontakttoxizität, wenn sie um das zehn- bis zwanzigfache höher dosiert wurden als in den Glasplattenversuchen. Der Schwermetallgehalt des getesteten Digestates liegt für alle Metalle weit unter den zulässigen Schweizer Grenzwerten (zum Beispiel: Cu 41.5 mg/kg TS; Zn 90.2 mg/kg TS) . Die Schwermetallmenge, die pro Fläche Boden ausgebracht wird, ist beim Einsatz von Digestat um ein vielfaches geringer als beim Einsatz von molluskiziden Schwermetallverbindungen. So liegt sie zum Beispiel bei den von Henderson durchgeführten Versuchen mit feuchtem Boden um das 1300fache höher als die Schwermetallmenge, die mit der niedrigsten Digestat-Dosierung (15 m3/ha) ausgebracht wird und sich immer noch als sehr effektiv erwiesen hat.

### Versuch 4: mögliche Nebenwirkungen auf Nicht-Zielorganismen (Regenwürmer)

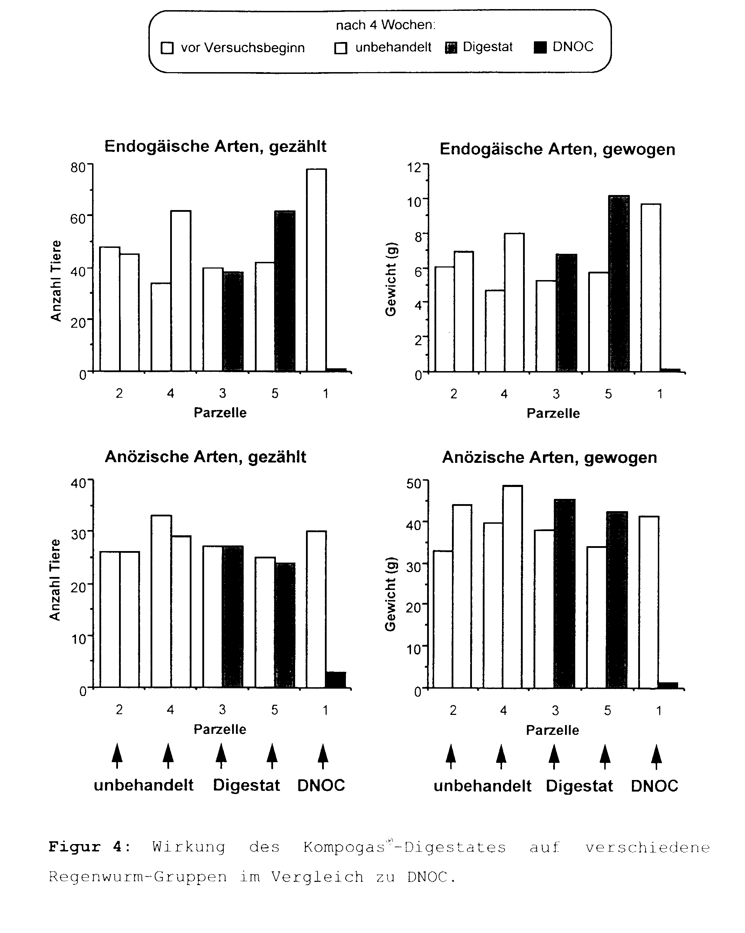

Die Toxizität eines Pestizides für Nicht-Zielorganismen, insbesondere für Nützlinge, ist ein wesentlicher Faktor für die amtliche Zulassung eines neuen Pestizides und auch für dessen Akzeptanz auf dem Markt. Da das vorliegende Präparat als zugelassenes Schneckenbekämpfungsmittel im Biolandbau Anwendung finden soll, ist die Unschädlichkeit gegenüber Nützlingen von besonderer Bedeutung.
In einem weiteren Feldversuch wurde daher die Wirkung von 100 m³/ha (1.0 cm Schichtdicke) Kompogas®-Digestat (Digestat) auf Regenwürmer mit der Wirkung von Dinitro-o-cresol (DNOC; 46%, 45 1/ha) verglichen. Als Negativkontrolle dienten die Werte aus unbehandelten Kontrollflächen. In diesem Versuch wurde die eingesetzte Digestat-Menge bewusst höher gewählt, als für eine effektive Bekämpfung nötig wäre. Unmittelbar nach dem Ausbringen wurde zudem intensiv bewässert, um die Wirkstoffe in die Regenwurmgänge zu schwemmen. Auf diese Weise sollten mögliche negative Effekte des Digestates auf die Regenwürmer überbetont werden, damit diese, falls vorhanden, auf jeden Fall zutage treten.
Jeweils einen Tag vor und 5 Wochen nach Versuchsbeginn wurden vier Stichproben pro Versuchsfläche genommen. Insgesamt wurden 2799 Regenwürmer mittels Senfpulverextraktion mit Nachgraben ausgetrieben und in ökologische Gruppen eingeteilt. Aufgrund der verschwindend geringen Anzahl von epigäischen Würmern wurden nur die endogäischen und die anözischen Arten weiter untersucht und ausgewertet. Erstere leben in der obersten Bodenschicht (bis ca. 15 cm Tiefe) und fressen den an organischem Material reichen Mineralboden, letztere leben in allen Bodenschichten und fressen vor allem organisches Material direkt von der Bodenoberfläche. Beide Gruppen kommen daher mehr oder weniger intensiv mit dem oberflächlich gestreuten Digestat in Kontakt, beziehungsweise nutzen es als Nahrungsquelle.
Wie in Figur 4 dargestellt, hat das erfindungsgemässe Molluskizid keinerlei negative Wirkungen auf die verschiedenen Regenwurm-Gruppen. Sowohl die Anzahl wie auch das Gewicht der gesammelten Tiere unterscheidet sich nicht von denen der unbehandelten Kontrollgruppe. Beim Einsatz von DNOC wurden dagegen sowohl die endogäischen Arten, wie auch die anözischen Arten in Anzahl und Gewicht bis auf wenige Prozent der Ausgangswerte reduziert. Der beim DNOC-Einsatz beobachtete drastische Rückgang der Regenwürmer zeigt, dass die Versuchsanordnung geeignet war, mögliche negative Effekte auf Regenwürmer zu erfassen. Das Digestat kann also bezüglich seiner Wirkung auf Regenwürmer völlig unbedenklich eingesetzt werden.

Im folgenden soll nun das bevorzugte Verfahren zur Herstellung der erfindungsgemässen molluskiziden Zusammensetzung beschrieben werden.
Der erste Schritt ist die anaerobe Vergärung von biogenen Haus-und Gartenabfällen durch methanogene Bakterien z.B. in einem Kompogas®-Fermenter gemäss EP-A-0 476 217 nach dem in EP-B-0 621 336 beschriebenen Kompogas®-verfahren.
Das Gärprodukt oder Digestat, das den Kompogas®-Fermenter verlässt ist hygienisch einwandfrei, da die mehrwöchige anaerobe Fermentation bei Temperaturen bis zu 60°C pathogene Keime, keimfähige Unkrautsamen und lebensfähige Wurzelteile vernichtet. Der pH-Wert des frischen Digestates liegt im basischen Bereich, vorzugsweise um pH 8.0.
Wie schon für die Versuche 1 bis 3 gezeigt, sind bereits das frische Digestat, das Presswasser davon und das verbleibende Retendat äusserst wirksam gegen Schnecken. Durch die im folgenden aufgezeigten fakultativen Schritte kann allerdings die Wirkung noch verbessert, die Handhabung erleichtert und die Haltbarkeit verlängert werden.

Durch einen Pressentwässerer wird der Wassergehalt des Digestates soweit gesenkt, dass der Trockensubstanz(TS)-Anteil zwischen 400 und 600 kg pro 1000 kg Digestat, vorzugsweise bei 480 kg/t, liegt.
Das frische Gärprodukt, das Partikel und Fremdkörper von bis zu 10 cm Durchmesser aufweisen kann, wird im folgenden Schritt gesiebt. Trotz der Reduktion des Wassergehaltes auf etwa 50% handelt es sich beim Digestat immer noch um ein äusserst schwieriges Siebgut, das vorteilhafterweise mit einer Anlage, wie sie zum Beispiel unter dem Markennamen LIWELL® bekannt ist, gesiebt wird. Die, je nach Bedarf wählbare, Lochweite des Siebes ermöglicht es das gesiebte Digestat mit gewünschten Korngrössen zu erhalten.

Die Formulierung der molluskiziden Zusammensetzung kann mittels folgender Zusatz- und Füllstoffe mit Methoden, die für die Herstellung von Pestiziden bekannt und gebräuchlich sind, erfolgen. Es können folgende Zusatzstoffe beigemengt werden: Mehl, Schrot und Kleie von verschiedenen Getreiden wie Weizen, Gerste, Hafer, sowie Reisstärke und Sojamehl.
Als Füllstoffe können natürliche Gesteinsmehle, wie Quarz, Kreide, Tonerden, Diatomeenerde oder Granulate aus natürlichem Gestein wie Calcit, Bims, Dolomit, Marmor oder organische kohlenstoffreiche Materialien wie Sägemehl, Rindenmulch oder Stroh zugesetzt werden.

Wie in den oben beschriebenen Versuchen gezeigt wurde geht die Wirksamkeit der erfindungsgemässen molluskiziden Zusammensetzungen unter Freilandbedingungen, das heisst unter dem Einfluss von zum Beispiel Sonnenlicht, Luft und Regen, bei Normaltemperatur, das heisst bei den in Mitteleuropa während der Vergetationsperiode herrschenden Temperaturen, innerhalb von etwa zwei Wochen fast völlig verloren. Dies ist zwar sehr wünschenswert und unter ökologischen Gesichtspunkten als positiv zu werten, für Lagerung und den Vertrieb hat es sich jedoch als vorteilhaft erwiesen, das verkaufsfertig formulierte Produkt in einem letzten Schritt so zu verpacken, dass es möglichst wenig oder keinen Kontakt mit Licht, Feuchtigkeit oder Luft hat. Dies kann am einfachsten in dichten Plastiksäcken geschehen, vorzugsweise unter Schutzatmosphäre (z.B. N₂ oder CO₂) oder vakuumverpackt.
Um die molluskizide Wirkung des Digestates während einer längerfristigen Lagerung über mehrere Wochen oder Monate zu erhalten hat sich Tiefkühlen als praktikable Methode erwiesen. Allerdings ist diese Lagerungsform mit hohem Energieverbrauch und hohen Kosten verbunden.
Für eine langfristige Lagerung können auch bekannte Konservierungsstoffe, die die Oxidation hemmen, der molluskiziden Zusammensetzung beigemischt werden.

Obwohl bei den bisher beschriebenen Verwendungen des erfindungsgemässen Molluskizides nur vom Einsatz gegen Pflanzenschädlinge die Rede war, ist es für den Fachmann offensichtlich, dass auch Schnecken die als Vektoren für Krankheitserreger fungieren mit der molluskiziden Zusammensetzung äusserst effektiv kontrolliert werden können. Bei allen terrestrischen Arten (zum Beispiel den Ueberträgern des Leberegels und des Lungenegels) empfiehlt es sich das Molluskizid direkt im Schneckenhabitat auszubringen. Zur Kontrolle der Ueberträgerarten mit aquatischer oder semi-aquatischer Lebensweise, sowie von Molluskiziden die als Schädlingen in Fischzuchten oder an technischen Anlagen auftreten, können die Uferbereiche, die an die befallenen Gewässer angrenzen, oder die Teile des Gewässers, die periodisch trockenfallen, behandelt werden.

## Patentansprüche

1. Zusammensetzung zur Bekämpfung von Schnecken, die landwirtschaftliche und gartenbauliche Schäden verursachen oder Vektoren für auf den Menschen und auf Wirbeltiere übertragbare Krankheiten sind, dadurch gekennzeichnet, dass die Zusammensetzung mindestens ein Gärprodukt oder Digestat oder eine Fraktion davon mit basischem pH-Wert aus anaerober thermophiler Fermentation biogener Haus-, Gewerbe- und Gartenabfälle als Wirkstoff enthält.

2. Zusammensetzung nach Anspruch 1, dadurch gekennzeichnet, dass das enthaltene Digestat einen Trockensubstanz-Anteil zwischen 400 und 600 kg pro 1000 kg Digestat aufweist.

3. Zusammensetzung nach einem der Ansprüche 1 oder 2, dadurch gekennzeichnet, dass das enthaltene Gärprodukt oder die enthaltene Fraktion davon gesiebt und von Fremdstoffen befreit ist.

4. Zusammensetzung nach Anspruch 1, dadurch gekennzeichnet, dass in dieser als Fraktion des Gärproduktes nur das Presswasser oder das Retendat oder eine Kombination derselben als Wirkstoff enthalten ist.

5. Zusammensetzung nach Anspruch 1, dadurch gekennzeichnet, dass ein Zusatzstoff wie Mehl, Schrot und Kleie von verschiedenen Getreiden wie Weizen, Gerste, Hafer, oder Reisstärke oder Sojamehl oder eine Kombination dieser Zusatzstoffe in der Zusammensetzung enthalten sind.

6. Zusammensetzung nach Anspruch 1, dadurch gekennzeichnet, dass Füllstoffe wie natürliche Gesteinsmehle oder organische kohlenstoffreiche Füllmaterialien oder eine Kombination davon in der Zusammensetzung enthalten sind.

7. Zusammensetzung nach Anspruch 1, dadurch gekennzeichnet, dass mindestens ein Konservierungsstoff, der die Oxidation verhindert in der Zusammensetzung enthalten ist.

8. Verfahren zur Herstellung einer molluskiziden Zusammensetzung gemäss Anspruch 1, dadurch gekennzeichnet, dass biogene Haus-, Garten- oder Gewerbeabfälle in einem ersten Schritt mittels methanogener Bakterien anaerob abgebaut oder vergoren werden und das erhaltene Digestat bis zu einem Trockensubstanz-Anteil zwischen 400 und 600 kg pro 1000 kg Digestat entwässert wird und anschliessend gesiebt wird, wobei die Fermentation unter Bedingungen durchgeführt wird, die sicherstellen, dass das Digestat frei von pathogenen Keimen und vitalen Samen, Keimlingen und Wurzelteilen ist.

9. Verfahren nach Anspruch 8, dadurch gekennzeichnet, dass das Digestat auf einem aus einer Gummimatte mit Lochung bestehendem Sieb gesiebt wird.

10. Verfahren nach Anspruch 8, dadurch gekennzeichnet, dass das Digestat mittels eines liegenden und im Pfropfstrom betriebenen Fermenter hergestellt wird.

11. Verfahren nach Anspruch 8, dadurch gekennzeichnet, dass das Digestat nach Entnahme aus dem Fermenter maximal 4 Tage aeroben Bedingungen bei Normaltemeratur ausgesetzt wird.

12. Verfahren nach Anspruch 8, dadurch gekennzeichnet, dass die Zusammensetzung zur Lagerung und zum Transport in Plastiksäcken luftdicht verpackt wird, wobei im Sack ein Vakuum oder eine Schutzatmosphäre erzeugt wird.

13. Verwendung einer Zusammensetzung gemäss Anspruch 1, dadurch gekennzeichnet, dass Schnecken bekämpft werden die Zier- oder Nutzpflanzen schädigen oder Zwischenwirte für Krankheitserreger von Menschen und Wirbeltieren sind.

14. Verwendung der Zusammensetzung gemäss Anspruch 13, dadurch gekennzeichnet, dass zur Schneckenkontrolle 15 m³ bis 150 m³ der Zusammensetzung pro Hektar ausgebracht werden.

15. Verwendung der Zusammensetzung gemäss Anspruch 14, dadurch gekennzeichnet, dass die Zusammensetzung oberflächlich gestreut oder in die obere Bodenschicht eingearbeitet wird.

16. Verwendung einer Zusammensetzung gemäss Anspruch 13, dadurch gekennzeichnet, dass die Schnecken, die bekämpft werden, den Familien Limacidae, Arionidae, Milacidae oder Helicidae angehören.

17. Verwendung einer Zusammensetzung gemäss Anspruch 13, dadurch gekennzeichnet, dass die Schnecken, die bekämpft werden, den Familien Lymnaeidae oder Bulinidae angehören.
